# EUROPÄISCHE PATENTSCHRIFT

(11) **EP 0 552 659 B1**
(45) Veröffentlichungstag und Bekanntmachung des Hinweises auf die Patenterteilung: **21.08.1996**
(21) Anmeldenummer: 93100407.1
(22) Anmeldetag: 13.01.1993
(51) Int. Cl.: H04N 9/79

(54) **Schaltung zur Regelung der Farbträgeramplitude in einem Videorecorder**
Circuit for controlling the amplitude of the chrominance carrier amplitude in a videorecorder
Circuit de commande de l'amplitude de la porteuse de chrominance dans un enregistreur

(30) Priorität: 22.01.1992 DE 4201564
(43) Veröffentlichungstag der Anmeldung: 28.07.1993
(73) Patentinhaber: Deutsche Thomson-Brandt GmbH, 78003 Villingen-Schwenningen (DE)
(72) Erfinder: Sowig, Helmut, W-7730 VS-Villingen (DE)

(56) Entgegenhaltungen:
- GB-A- 2 054 993
- GB-A- 2 075 303
- US-A- 4 433 255
- PATENT ABSTRACTS OF JAPAN vol. 4, no. 75 (E-013)31. Mai 1980 & JP-A-55 044 233
- PATENT ABSTRACTS OF JAPAN vol. 5, no. 117 (E-067)28. Juli 1981 & JP-A-56 057 372
- PATENT ABSTRACTS OF JAPAN vol. 5, no. 129 (E-070)19. August 1981 & JP-A-56 066 985
- PATENT ABSTRACTS OF JAPAN vol. 13, no. 268 (E-775)20. Juni 1989 & JP-A-10 58 193

## Beschreibung

Die Erfindung geht aus von einer Schaltung gemäß dem ersten Teil des Anspruchs 1.

Ein Videorecorder hat wie ein Fernsehempfänger eine sogenannte ACC (automatic color control)-Schaltung, in der die Amplitude des vom Band abgetasteten Farbträgers durch Auswertung der Amplitude des Farbsynchronsignals auf ihren Sollwert geregelt wird. Bei Wiedergabe gelten für die Zeitkonstante dieser Regelschaltung zwei, einander widersprechende Anforderungen:
1. Das zur Eliminierung von Farbübersprechen verwendete Kammfilter hat eine endliche Filtertiefe und arbeitet üblicherweise mit einer Verzögerungsleitung für eine Zeile bei NTSC bzw. zwei Zeilen bei PAL. Voraussetzung für eine gute Filterwirkung ist, daß der Farbträger bei der Wiedergabe unverfälscht, d.h. mit den durch das Übersprechen verursachten Phasen- und Amplitudenfehlern, zum Kammfilter geführt wird. Daraus folgt, daß der Farbträger während ein oder zwei Zeilen nur so wenig ausgeregelt werden darf, daß keine wesentliche Verschlechterung der Übersprechabsenkung auftritt. Bei zu schneller Regelung tritt ein horizontal sortiertes Rauschen in der Farbe auf.
2. Die Regelung muß andererseits so schnell sein, daß Pegelunterschiede der Videoköpfe, die nach der Kopfumschaltung zum Tragen kommen, sowie bandführungsbedingte Pegeleinbrüche am Kopftrommeleinlauf während der Vertikalaustastzeit und der folgenden Bildüberschreibung ausgeregelt werden. Bei zu langsamer Regelung tritt Farbflackern am oberen Bildrand auf.

Bei dem erforderlichen Kompromiß wird üblicherweise Punkt 1 stärker berücksichtigt als Punkt 2, weil
- bei der durch das Prinzip der Farbaufzeichnung verringerten Farbqualität zusätzliches Rauschen stark stören würde,
- durch Einsetzen von gepaarten Videoköpfen Pegelunterschiede relativ klein gehalten werden können,
- Pegeleinbrüche am Kopftrommeleinlauf bei sorgfältiger Bandführung gering sind und
- die ACC im angeschlossenen Fernsehgerät evtl.nicht ausgeregelte Pegelunterschiede weiter reduziert.

Besonders kritisch bezüglich Farbflackern ist das Überspielen von einem Videorecorder auf den anderen.

Aus JP-A-55 044 233 ist die Umschaltung der Zeitkonstante bekannt, aber so, daß während des Bildes, eine kleinere Zeitkonstante verwendet wird.

Der Erfindung liegt die Aufgabe zugrunde, mit einfachen Mitteln die aufgeführten Nachteile zu vermeiden und zu bewirken, daß sowohl nach der Kopfumschaltung als auch im Bildhinlauf die Farbträgeramplitude optimal ausgeregelt wird. Diese Aufgabe wird durch die im Anspruch 1 angegebene Erfindung gelöst. Vorteilhafte Weiterbildungen der Erfindung sind in den abhängigen Ansprüchen angegeben.

Bei der erfindungsgemäßen Lösung wird also die für das eigentliche Bild vorteilhafte langsame Ausregelung gewählt, d.h. eine große Zeitkonstante im Weg der Regelspannung oder im Falle einer ACC mit Konstantstrom ein kleiner Ladestrom. Zu Beginn des Bildes oder schon nach dem Kopfumschaltimpuls, auf jeden Fall in dem Zeitraum, in dem der Elektronenstrahl durch Rücklauf bzw. Überschreibung auf dem Bildschirm nicht sichtbar wird, wird auf eine schnelle Ausregelung d.h. eine kleine Zeitkonstante oder großen Ladestrom umgeschaltet.

Dabei wird die Tatsache vorteilhaft ausgenutzt, daß zu Beginn eines Bildes während etwa 20 Zeilen kein sichtbares Bild geschrieben wird und somit eventuelles Farbflackern und Einschwingvorgänge ohnehin unsichtbar bleiben. Durch diese Lösung wird erreicht, daß nach dem Kopfwechsel, wenn der abgetastete Farbträger den durch den Kopfwechsel bedingten Phasensprung und den Amplitudeneinbruch hinter sich hat, eine möglichst schnelle Ausregelung auf seine Sollamplitude erfährt und die Amplitude des Farbträgers zu Beginn des sichtbaren Bildes, etwa bei der Zeile Nr. 20, bereits ihren Sollwert hat. Durch die Erfindung wird also ein optimaler Kompromiß erzielt zwischen einer großen Zeitkonstante, die zwar vorteilhaft und notwendig für eine Bildwiedergabe ohne horizontales Rauschen, aber nachteilig für eine schnelle Einregelung nach dem Kopfwechsel ist, und zwischen einer kleinen Zeitkonstante, die zwar für eine schnelle Einregelung nach dem Kopfwechsel vorteilhaft, jedoch im Hinblick auf horizontales Rauschen im Bild nachteilig ist. Bei Anwendung der Erfindung kann die große Zeitkonstante während des Bildes gegenüber bisherigen Werten noch erhöht werden, wodurch Vorteile hinsichtlich des horizontalen Rauschens erzielt werden, ohne daß eine Gefahr von Farbflackern am oberen sichtbaren Bildrand auftritt.

Die Erfindung wird im folgenden anhand der Zeichnung erläutert. Darin zeigen
- Fig. 1: ein Blockschaltbild einer erfindungsgemäß ausgebildeten Wiedergabeschaltung für einen Videorecorder,
- Fig. 2: Kurven zur Erläuterung der Wirkungsweise der Schaltung nach Fig. 1 und
- Fig. 3 - 5: Schaltungsbeispiel für die Umschaltung der Zeitkonstante.

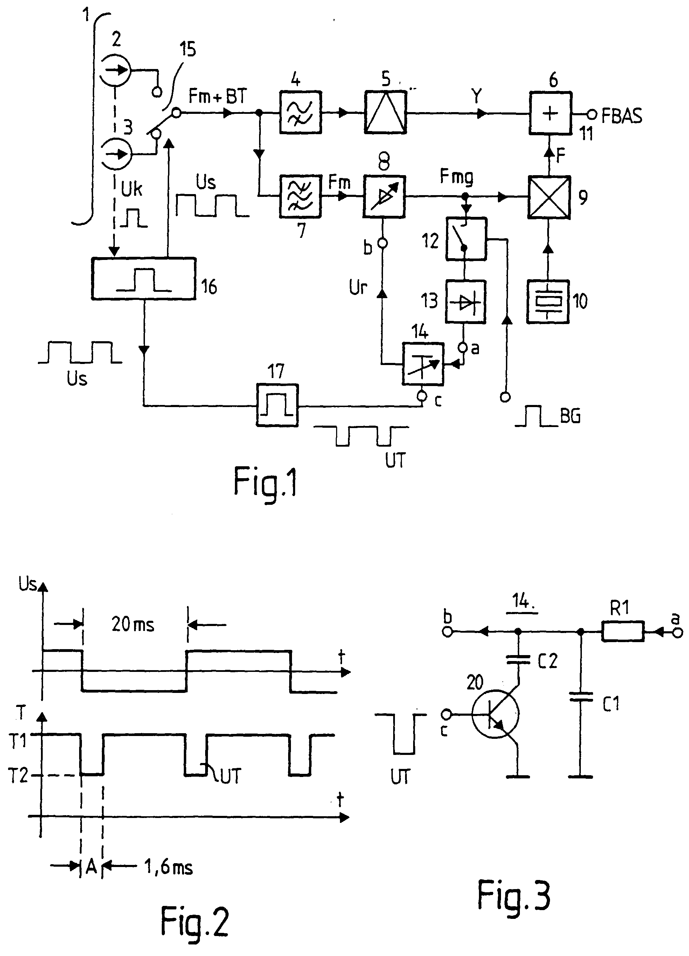

In Fig. 1 werden von dem Magnetband 1 mit zwei rotierenden Magnetköpfen 2, 3 der mit dem Leuchtdichtesignal frequenzmodulierte Bildträger BT und der unterhalb dessen Frequenzspektrums aufgezeichnete, in der Frequenz herabgesetzte Farbträger Fm, auch color under Träger genannt, abgetastet. Der Bildträger BT gelangt über den Hochpaß 4 mit einer Grenzfrequenz von 1,2 MHz auf den FM-Demodulator 5, der das Leuchtdichtesignal Y an die Addierstufe 6 liefert. Der Farbträger Fm gelangt über den Bandpaß 7 mit einem Durchlaßbereich bei 627 kHz auf den regelbaren Verstärker 8 und von dessen Ausgang als geregelter Farbträger Fmg auf die Mischstufe 9, der außerdem ein Mischträger vom Oszillator 10 zugeführt wird. Die Mischstufe 9 liefert wieder den Farbträger F mit der Original PAL-Farbträgerfrequenz von 4,43 MHz an die Addierstufe 6. Am Ausgang 11 steht somit das FBAS-Signal zur Verfügung. Aus dem Farbträger Fmg am Ausgang des Verstärkers 8 wird mit dem Tor 12 das Farbsynchronsignal ausgewertet. Das Tor 12 ist durch den Impuls BG (Burst Gate) während der Dauer des Farbsynchronsignals durchlässig gesteuert. Das Farbsynchronsignal wird in dem Gleichrichter 13 gleichgerichtet und erzeugt am Regeleingang b des Verstärkers 8 eine Regelspannung Ur, die die Amplitude des Farbträgers Fmg auf den Sollwert regelt. Zwischen dem Ausgang a des Gleichrichters 13 und dem Eingang b des Verstärkers 8 ist ein Zeitkonstantenglied 14 wirksam, das eine große Zeitkonstante von 50 - 70 Zeilen entsprechend ca 4 ms hat.

Das Signal wird mit dem Umschalter 15 von Halbbild zu Halbbild abwechselnd von den beiden Videoköpfen 2, 3 abgenommen. Der Umschalter 15 wird von der Schaltspannung Us jeweils am Ende eines Halbbildes betätigt. Us wird in der Steuerschaltung 16 erzeugt. Diese wird von einer die Köpfe 2, 3 tragenden, rotierenden Kopftrommel mit einem Kopftrommelimpuls Uk gesteuert, der die jeweilige Winkellage der Kopftrommel anzeigt. Die soweit beschriebene Schaltung ist bekannt.

Die Schaltspannung Us von der Steuerschaltung 16 gelangt außerdem auf den Impulsformer 17. Dieser erzeugt gemäß Fig. 2 jeweils bei einer Flanke der Schaltspannung Us, also jeweils zu Beginn eines Halbbildes, einen Impuls UT mit einer Dauer A von etwa 25 Zeilen entsprechend etwa 1,6 ms. Dieser Impuls gelangt auf einen Steuereingang c des Zeitkonstantengliedes 14 und schaltet die Zeitkonstante T von dem während des Bildes wirksamen hohen Wert T1 von ca 4 ms während des Zeitraumes A auf einen geringeren Wert T2 von ca 1 ms um. Der Zeitraum A entspricht etwa dem Zeitraum, während dessen der Elektronenstrahl durch Überschreibung auf dem Bildschirm nicht sichtbar ist. Durch die verringerte Zeitkonstante T2 wird sichergestellt, daß die Amplitude des geregelten Farbträgers Fmg nach dem durch den Kopfwechsel erfolgten Phasensprung und Amplitudeneinbruch zu Beginn des sichtbaren Bildes, also am Ende des Zeitraumes A in Fig. 2, bereits wieder ihren Sollwert hat. Dadurch werden Farbstörungen in Form eines Farbflackerns am oberen sichtbaren Bildrand vermieden.

Die Schaltung kann so ausgebildet werden, daß die Zeitkonstante während des Zeitraums A von dem kleinen Wert kontinuierlich auf den großen Wert ansteigt.

Fig. 3 zeigt eine Schaltung zur Umschaltung der Zeitkonstante T. Das Zeitkonstantenglied 14 enthält einen Widerstand R1 und zwei Kondensatoren C1 und C2. Während des eigentlichen Bildes ist der Transistor 20 durch die Spannung UT an der Klemme c leitend gesteuert. C1 und C2 liegen parallel und bilden die genannte große Zeitkonstante T1. Während des Zeitraums A ist der Transistor 20 durch die Schaltspannung UT gesperrt. Der Kondensator C2 ist somit nicht wirksam. C1 bildet dann zusammen mit R1 die kleinere Zeitkonstante T2. Vorzugsweise wird durch die Schaltspannung UT ein Kondensator an einer Klemme eines die übrige Schaltung darstellenden integrierten Schaltkreises zu- und abgeschaltet.

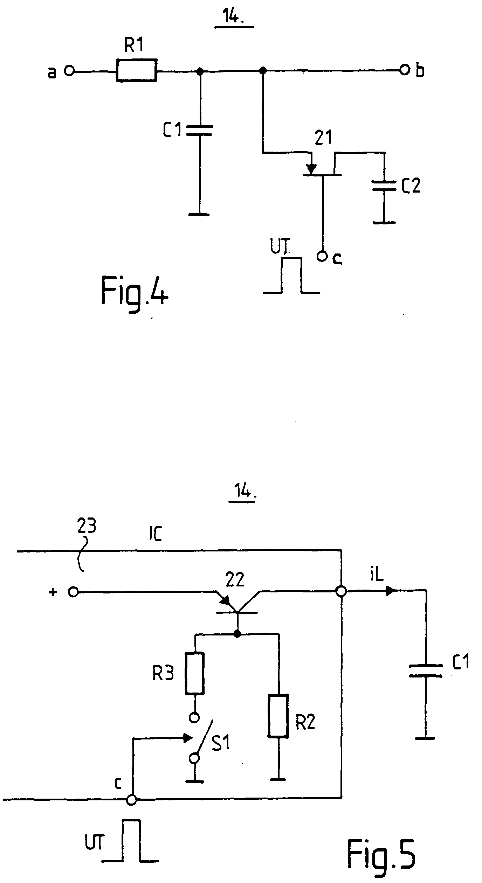

Fig. 4 zeigt eine Variante zu der Schaltung gemäß Fig. 3, in der die Umschaltung der Zeitkonstante, also die Zu- und Abschaltung des Kondensators C2 mit einem Feldeffekttransistor 21 erfolgt. An dessen Steuerelektrode c ist wie in Fig. 3 die Schaltspannung UT angelegt. Während des Zeitraumes A ist der FET 21 durch die Schaltspannung UT gesperrt und während des übrigen Zeitraumes, also während des Bildhinlaufes, leitend, so daß C2 zur Erzielung der großen Zeitkonstante C1 parallel geschaltet ist.

Fig. 5 zeigt ein Beispiel für die Umschaltung der Zeitkonstante, bei der der Ladestrom iL für den Kondensator C1 umgeschaltet wird. In einem IC 23 ist eine Konstantstromquelle mit dem Transistor 22 und den Widerständen R2 und R3 vorgesehen, die einen Ladestrom iL für den Kondensator C1 zur Umladung entsprechend der jeweiligen Regelung liefert. Der Wert des Ladestromes iL wird durch die Schaltspannung UT umgeschaltet, indem über den Schalter S1 der Widerstand R3 dem Widerstand R2 parallel geschaltet wird. Während des Zeitraumes A ist durch UT der Schalter S1 geschlossen, so daß der Widerstand im Basiskreis entsprechend verringert wird. Dadurch wird der Wert des Ladestromes iL vergrößert, C1 also schneller umgeladen, was der verringerten Zeitkonstante T2 entspricht. Die Umschaltung der Zeitkonstante erfolgt also hier nicht durch Zu- und Abschalten eines Kondensators innerhalb eines Siebgliedes, sondern durch Umschaltung des Ladestromes iL für den Siebkondensator C1, der ansonsten die gleiche Funktion hat wie in Fig. 3 und 4.

## Patentansprüche

1. Schaltung zur Regelung der Farbträgeramplitude in einem Videorecorder, bei der bei der Wiedergabe eine aus der Amplitude des Farbsynchronsignals abgeleitete Regelspannung (Ur) über ein Zeitkonstantenglied (14) die Verstärkung eines Farbträger-Verstärkers (8) regelt, **dadurch gekennzeichnet,** daß die Zeitkonstante (T) während eines Zeitraums (A) zu Beginn des Bildes, in dem der Elektronenstrahl durch Überschreibung auf einem dem Bildschirm nicht sichtbar ist, von einem während des sichtbaren Bildes wirksamen großen Wert (T1) auf einen demgegenüber kleineren Wert (T2) umgeschaltet ist.

2. Schaltung nach Anspruch 1, **dadurch gekennzeichnet,** daß der Zeitraum (A) mit dem kleineren Wert (T2) der Zeitkonstante (T) etwa 20 Zeilen beträgt.

3. Schaltung nach Anspruch 1, **dadurch gekennzeichnet,** daß die kleine Zeitkonstante (T2) während des genannten Zeitraums (A) etwa 1 ms und die große Zeitkonstante (T1) während des übrigen Bildes etwa 4 ms beträgt.

4. Schaltung nach Anspruch 1, **dadurch gekennzeichnet,** daß die Zeitkonstante (T) durch eine Steuerspannung (UT) so gesteuert ist, daß sie während des genannten Zeitraums (A) von dem kleinen Wert (T2) kontinuierlich auf den großen Wert (T1) ansteigt.

5. Schaltung nach Anspruch 1, **dadurch gekennzeichnet,** daß im Weg der Regelspannung Ur ein Siebglied mit einem Widerstand (R1) und einem Kondensator (C1) liegt und mit einem Schalter (20, 21, S1) dem Kondensator (C1) ein weiterer Kondensator (C2) parallel schaltbar ist.

6. Schaltung nach Anspruch 5, **dadurch gekennzeichnet,** daß der Schalter durch einen Transistor (20) oder einen Feldeffekttransistor (21) gebildet ist.

7. Schaltung nach Anspruch 1, **dadurch gekennzeichnet,** daß die Umschaltung der Zeitkonstante dadurch erfolgt, daß der Wert des Ladestromes (iL) für den Kondensator (C1) des Siebgliedes (C1, R1) umgeschaltet wird.

8. Schaltung nach Anspruch 7, **dadurch gekennzeichnet,** daß der Ladestrom (iL) für den Kondensator (C1) von einer in einem integrierten Schaltkreis enthaltenden Konstantstromquelle (22) geliefert ist und der von der Konstantstromquelle gelieferte Ladestrom (iL) für den extern integrierten Schaltkreis angeordneten Kondensator (C1) durch eine an eine Steuerklemme (c) des integrierten Schaltkreises (23) angelegte Schaltspannung (UT) umschaltbar ist.

## Claims

1. Circuit for regulating the color subcarrier amplitude in a video recorder in which, on reproduction (playback), a regulating voltage (Ur) derived from the amplitude of the color sync signal regulates the amplification of a color subcarrier amplifier (8) via a time constant element (14), **characterized in that** during a time period (A) at the start of the picture in which the electron beam is not visible on a picture screen through overscanning the time constant (T) is switched over from a large value (T1) effective during the visible picture to a value (T2) smaller than said large value.

2. Circuit acording to claim 1, **characterized in that** the time period (A) with the smaller value (T2) of the time constant (T) is about 20 lines.

3. Circuit acording to claim 1, **characterized in that** the small time constant (T2) during the above-named period (A) is approximately 1 ms, and the large time constant (T1) during the rest of the picture is approximately 4 ms.

4. Circuit acording to claim 1, **characterized in that** the time constant (T) is controlled by a control voltage (UT) in such a way that it climbs, during the above-named period (A), continuously from the small value (T2) to the large value (T1).

5. Circuit acording to claim 1, **characterized in that** a filter section with a resistor (R1) and a capacitor (C1) is arranged in the path of the regulating voltage Ur, and a further capacitor (C2) can be switched in parallel to said capacitor (C1) by means of a switch (20, 21, S1).

6. Circuit acording to claim 5, **characterized in that** the switch is formed by a transistor (20) or a field effect transistor (21).

7. Circuit acording to claim 1, **characterized in that** the switching-over of the time constant happens in that the value of the charging current (iL) for the capacitor (C1) of the filter section (C1, R1) is switched over.

8. Circuit acording to claim 7, **characterized in that** the charging current (iL) for the capacitor (C1) is supplied by a constant current source (22) contained in an integrated circuit and the charging current (iL), supplied by the constant current source, for the capacitor (C1) arranged external of the integrated circuit can be switched over by means of a switching voltage (UT) applied to a control terminal (c) of the integrated circuit (23).

## Revendications

1. Circuit de réglage de l'amplitude de la sous-porteuse de chrominance dans un magnétoscope où, lors de la reproduction, une tension de réglage (Ur) déduite de l'amplitude du signal de chrominance règle le gain d'un amplificateur de sous-porteuse de chrominance (8) par l'intermédiaire d'un circuit à constante de temps (14), circuit de réglage **caractérisé en ce que**, pendant un intervalle (A) au début de l'image durant lequel le faisceau électronique est invisible sur un écran, la constante de temps (T) est commutée de telle manière qu'elle passe d'une haute valeur (T1) effective pendant la durée de l'image visible, â une valeur inférieure (T2) à cette première.

2. Circuit selon la revendication 1 **caractérisé en que** la durée dudit intervalle (A) ayant la moindre valeur (T2) de la constante de temps (T), est de l'ordre de 20 lignes environ.

3. Circuit selon la revendication 1 **caractérisé en ce que** la faible constante de temps (T2) est de l'ordre de 1 ms durant ledit intervalle (A), tandis que la haute constante de temps (T2) est de l'ordre de 4 ms pendant le reste de l'image.

4. Circuit selon la revendication 1 **caractérisé en ce que** la constante de temps (T) est commandée par l'intermédiaire d'une tension de commande (UT) de telle manière qu'elle augmente de façon continue durant ledit intervalle (A) pour passer de la faible valeur (T2) à la haute valeur (T1).

5. Circuit selon la revendication 1 **caractérisé en ce qu**'un élément filtre incluant une résistance (R1) et un condensateur (C1) est monté dans le trajet de la tension de réglage Ur, et qu'un commutateur (20, 21, S1) permet de connecter un second condensateur (C2) en parallèle par rapport audit condensateur (C1).

6. Circuit selon la revendication 5 **caractérisé en ce que** ledit commutateur est constitué par un transistor (20) ou un transistor à effet de champ (21).

7. Circuit selon la revendication 1 **caractérisé en ce que** la commutation de la constante de temps est assurée grâce à la commutation de l'intensité du courant de charge (iL) du condensateur (C1) de l'élément filtre (C1, R1).

8. Circuit selon la revendication 7 **caractérisé en ce que** le courant de charge (iL) du condensateur (C1) est fourni par une source de courant constant (22) comprise dans un circuit intégré, et que ce courant de charge (iL) fourni par ladite source de courant constant pour le condensateur (C1) situé à l'extérieur du circuit intégré, peut être commuté grâce à une tension de commutation (UT) appliquée à une borne de commande (c) dudit circuit intégré (23).
